# EUROPEAN PATENT APPLICATION

(11) **EP 4 085 742 A1**
(43) Date of publication of application: **09.11.2022**
(21) Application number: 22168349.3
(22) Date of filing: 14.04.2022
(51) Int. Cl.: A01B 76/00, A01B 79/00, G05D 1/02

(54) **WORK MANAGEMENT METHOD, WORK MANAGEMENT SYSTEM, AND WORK MANAGEMENT PROGRAM**

(30) Priority: 28.04.2021 JP 2021075765
(71) Applicant: Yanmar Holdings Co., Ltd., Osaka-shi, Osaka (JP)
(72) Inventor: OKAMOTO, Masaki, Naka-Ku, Okayama (JP); MITANI, Hideki, Naka-Ku, Okayama (JP); YOSHIMINE, Takumi, Osaka-shi, Osaka (JP)
(74) Representative: Dennemeyer & Associates S.A.

(57) **Abstract**

[Problem] The present invention provides a work machine management method, a work machine management system, and a work machine management program capable of easily identifying an operation status of a work machine.

[Solution] The work machine management method includes: determining whether a latest location of a work machine (2) is in a field (9) on the basis of machine information at least including location information indicating the latest location of the work machine (2) and field information at least indicating a location and an area of the field (9) (S3); and outputting pictorial figure information indicating a pictorial figure for displaying whether the latest location of the work machine (2) is in the field (9) in an identifiable manner (S5).

## Description

### TECHNICAL FIELD

The present invention relates to a work machine management method, a work machine management system, and a work machine management program, and is suitably used, for example, for a work machine management method, a work machine management system, and a work machine management program related to a machine that performs agricultural work.

### BACKGROUND ART

There is a case where plural work machines perform agricultural work in plural fields according to a work plan. In such a case, there is a need for means for remotely managing each of the work machines. In particular, there is a need for means for managing the work machines in a manner that a manager, a workers, and a work assistant can easily comprehend an operating status of the respective work machine.

In association with the above, a ground work management system is disclosed in Patent Document 1 (Japanese Patent Application Publication No. 2014-38437). This ground work management system acquires positioning information and a machine body ID from each of plural ground work machines performing agricultural work or the like, and displays, on a map, a position and the machine body ID of each of the ground work machines on a remote display. In this way, it is possible to remotely comprehend the position of each of the ground work machines. However, with the ground work management system disclosed in Patent Document 1, although it is possible to comprehend the positions of the plural ground work machines on the map, it is difficult to instantly comprehend whether each of the ground work machines is in the field or on a road near the field. In addition, with the ground work management system disclosed in Patent Document 1, it is difficult to instantly comprehend whether the ground work machine in the field is currently working or not working.

### PRIOR ART DOCUMENT

### PATENT DOCUMENT

Patent Document 1: Japanese Patent Application Publication No. 2014-38437

### SUMMARY OF INVENTION

### TECHNICAL PROBLEM

In view of the above circumstance, one of the purposes of the present disclosure is to provide a work machine management method, a work machine management system, and a work machine management program capable of easily identifying an operation status of a work machine. The other purposes and novel features of the present disclosure will become apparent from the description of the present specification and the accompanying drawings.

### SOLUTION TO PROBLEM

A description will hereinafter be made on means for solving the problem by using numbers used in DESCRIPTION OF EMBODIMENTS. These numbers are added to clarify corresponding relationships between CLAIMS and DESCRIPTION OF EMBODIMENTS. However, those numbers shall not be used to interpret the technical scope of the invention described in CLAIMS.

According to an embodiment, a work machine management method includes: determining whether a latest location of a work machine (2) is in a field (9) on the basis of machine information at least including location information indicating the latest location of the work machine (2) and field information at least indicating a location and an area of the field (9) (S3); and outputting pictorial figure information indicating a pictorial figure (7A to 7F) for displaying whether the latest location of the work machine (2) is in the field (9) in an identifiable manner (S5).

According to an embodiment, a work machine management system (1) includes a determination section (312) and an output section (313). The determination section (312) determines whether a latest location of a work machine (2) is in a field (9) on the basis of machine information at least including location information indicating the latest location of the work machine (2) and field information at least indicating a location and an area of the field (9). The output section (313) outputs pictorial figure information indicating a pictorial figure (7A to 7F) for displaying whether the latest location of the work machine (2) is in the field (9) in an identifiable manner.

According to the embodiment, a work machine management program realizes specified processing when being executed. This processing includes: determining whether the latest location of the work machine (2) is in the field (9) on the basis of machine information at least including the location information indicating the latest location of the work machine (2) and the field information at least indicating the location and the area of the field (9) (S3); and outputting the pictorial figure information indicating the pictorial figure (7A to 7F) for displaying whether the latest location of the work machine (2) is in the field (9) in the identifiable manner (S5).

### ADVANTAGEOUS EFFECTS OF INVENTION

According to the embodiment, the work machine management system can assist with identification of an operation status of the work machine by a user.

### BRIEF DESCRIPTION OF DRAWINGS

Fig. 1 is a view illustrating a configuration example of a work machine management system according to an embodiment.
Fig. 2 is a block circuit diagram illustrating a configuration example of an onboard terminal according to the embodiment.
Fig. 3 is a block circuit diagram illustrating a configuration example of a terminal according to the embodiment.
Fig. 4 is a block circuit diagram illustrating a configuration example of a server according to the embodiment.
Fig. 5 is a flowchart illustrating a configuration example of a work machine management method according to the embodiment.
Fig. 6 is a table illustrating examples of pictorial figures according to the embodiment.
Fig. 7A is a table illustrating examples of pictorial parts according to the embodiment.
Fig. 7B is a table illustrating examples of pictorial parts according to the embodiment.
Fig. 7C is a table illustrating examples of pictorial parts according to the embodiment.
Fig. 8A is a view illustrating an example of a display according to the embodiment.
Fig. 8B is a view illustrating an example of the display according to the embodiment.
Fig. 8C is a view illustrating an example of the display according to the embodiment.
Fig. 9A is a view illustrating an example of the display according to the embodiment.
Fig. 9B is a view illustrating an example of the display according to the embodiment.
Fig. 10 is a view illustrating an example of the display according to the embodiment.

### DESCRIPTION OF EMBODIMENTS

A description will hereinafter be made on a mode for carrying out a work machine management method, a work machine management system, and a work machine management program according to the present invention with reference to the accompanying drawings.

### (First Embodiment)

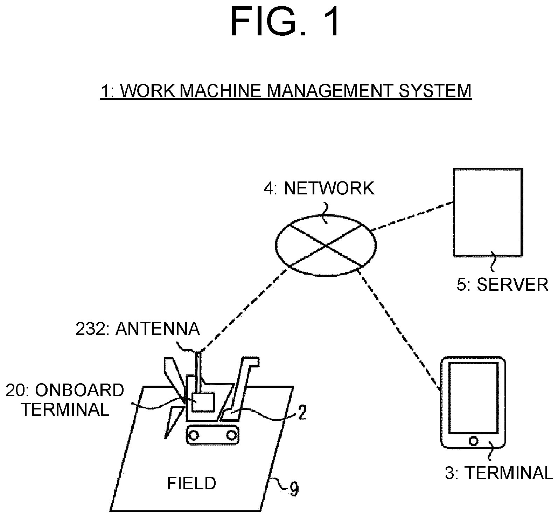

As illustrated in Fig. 1, a work machine management system 1 according to an embodiment includes an onboard terminal 20 mounted on a work machine 2, a terminal 3, and a server 5. The work machine 2 is a vehicle, such as a harvester, a tractor to which a work machine is attached, or a planter, that performs agricultural work in a field 9. The onboard terminal 20 can be connected to a network 4 through wireless communication using an antenna 232. The terminal 3 can be connected to network 4 through wired communication or the wireless communication. The terminal 3 can acquire, via the network 4, various types of information substantially in real time from the onboard terminal 20 of the work machine 2 working in the field 9. The terminal 3 is a tablet-type information terminal having a wireless communication function, for example.

The server 5 and the terminal 3 may have overlapping configurations to exert some of the functions. A description will hereinafter be made on a case where the terminal 3 and the server 5 have the overlapping similar configuration. However, the overlapping configuration can be omitted from the terminal 3 or the server 5.

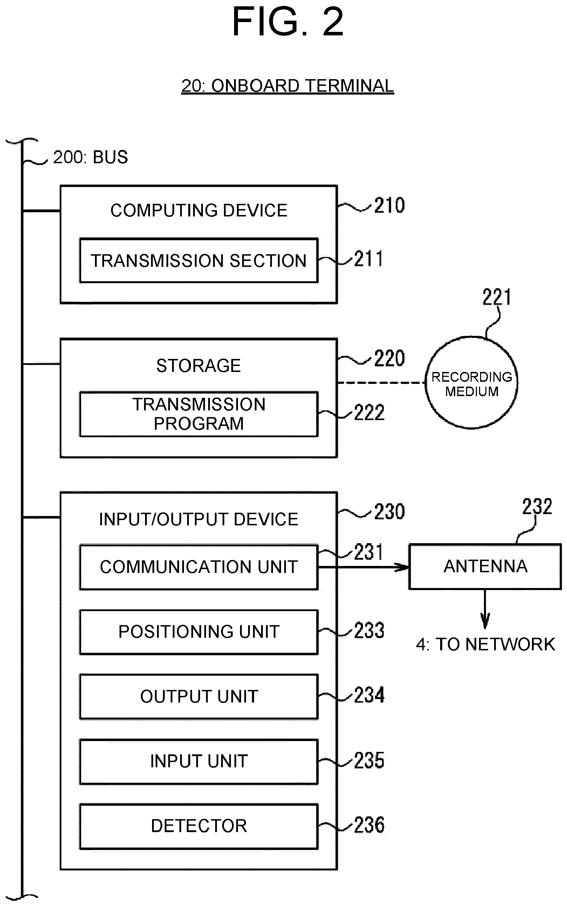

As illustrated in Fig. 2, the onboard terminal 20 according to the embodiment may have a configuration as a so-called computer. The onboard terminal 20 includes a bus 200, a computing device 210, a storage 220, and an input/output device 230. The computing device 210, the storage 220, and the input/output device 230 are connected to each other in a mutually communicable manner via the bus 200.

The computing device 210 virtually includes a transmission section 211. The transmission section 211 is a functional block that exerts a specified function when the computing device 210 executes a transmission program 222. The transmission program 222 is stored in the storage 220. The transmission program 222 may be read from a recording medium 221 and stored in the storage 220, or may be acquired from outside via the input/output device 230 and stored in the storage 220.

The input/output device 230 includes a communication unit 231, a positioning unit 233, an output unit 234, an input unit 235, and a detector 236. The communication unit 231 can be connected to the network 4 via the antenna 232, and can communicate with the terminal 3 and/or the server 5 via the network 4. The antenna 232 may be a part of the onboard terminal 20, or may be a part other than the onboard terminal 20 such as a part of the work machine 2. The positioning unit 233 acquires location information indicating a location of the positioning unit 233 itself by using the Global Navigation Satellite System (GNSS) or the like. The location information acquired by the positioning unit 233 indicates a location of the onboard terminal 20 and thus indicates a location of the work machine 2, on which the onboard terminal 20 is mounted. The output unit 234 includes a display device and a lamp, for example, and may output information on a state of the onboard terminal 20, or the like. The input unit 235 includes a switch and a button, for example, and may be used by a user to operate the onboard terminal 20. The detector 236 receives, from the work machine 2, a work machine state signal indicating a state of the work machine 2.

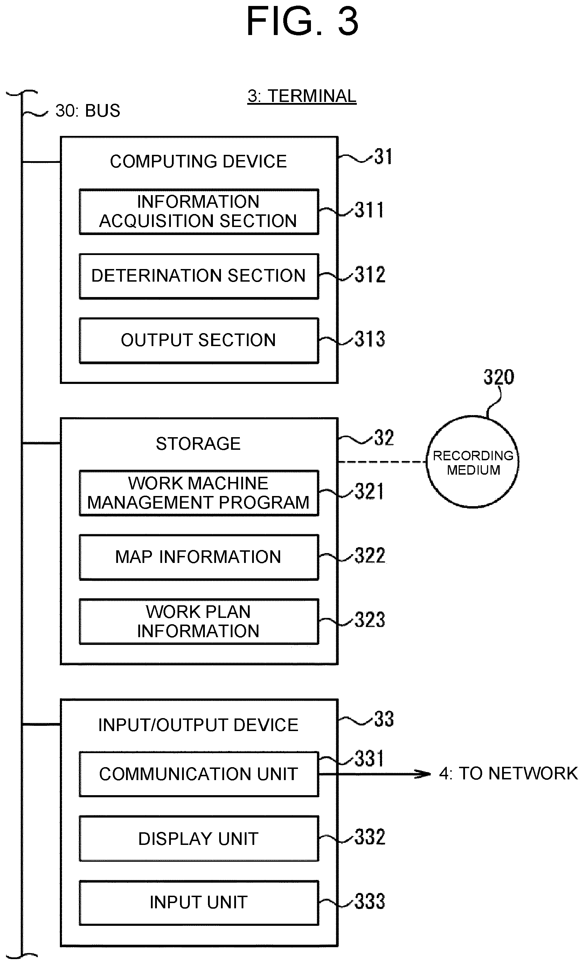

As illustrated in Fig. 3, the terminal 3 according to the embodiment may have a configuration as the so-called computer. The terminal 3 includes a bus 30, a computing device 31, a storage 32, and an input/output device 33. The computing device 31, the storage 32, and the input/output device 33 are connected to each other in a mutually communicable manner via the bus 30.

The computing device 31 virtually includes an information acquisition section 311, a determination section 312, and an output section 313. Each of the information acquisition section 311, the determination section 312, and the output section 313 is a functional block that exerts a specified function when the computing device 31 executes a work machine management program 321. The functions provided to these functional blocks will be described below.

The storage 32 stores the work machine management program 321, map information 322, and work plan information 323. For example, the map information 322 includes information on a location and an area of the field 9. The work plan information 323 includes information on a work plan to be performed by the work machine 2 in the field 9. The work machine management program 321, the map information 322, and the work plan information 323 may be read from a recording medium 320 and stored in the storage 32, or may be acquired from the outside via the input/output device 33 and stored in the storage 32.

The input/output device 33 includes a communication unit 331, a display unit 332, and an input unit 333. The communication unit 331 can be connected to the network 4 via the wired communication and/or the wireless communication, and can communicate with the onboard terminal 20 and/or the server 5 via the network 4. The display unit 332 displays a determination result by the determination section 312 of the computing device 31 in a visually recognizable manner. The input unit 333 includes a touchpad and a button, for example, and may be used by the user to operate the terminal 3. The display unit 332 and the input unit 333 may be installed, as an integrated touch panel, in the terminal 3.

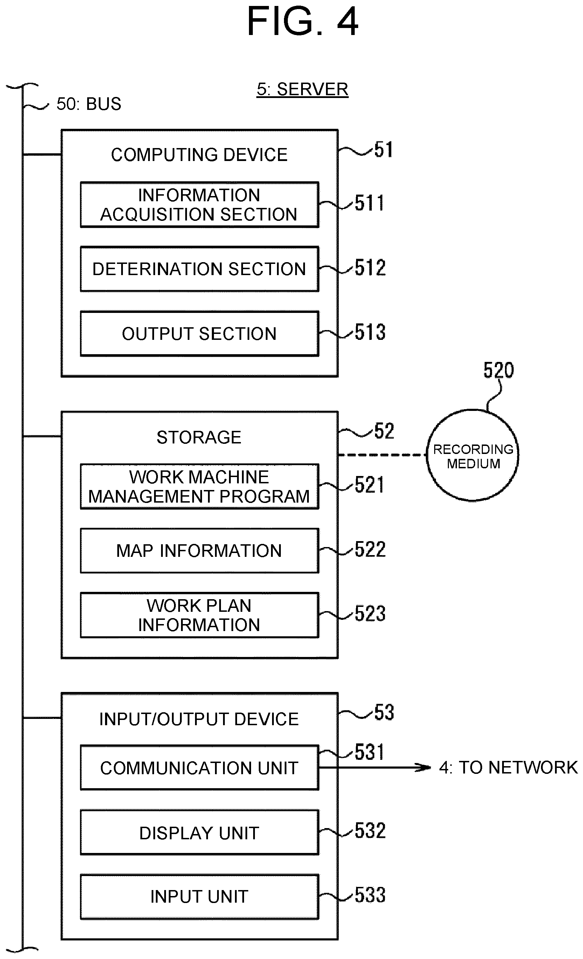

As illustrated in Fig. 4, the server 5 according to the embodiment has similar components to those of the terminal 3, which is illustrated in Fig. 3. The server 5 according to the embodiment may have a configuration as the so-called computer. The server 5 includes a bus 50, a computing device 51, a storage 52, and an input/output device 53. The computing device 51, the storage 52, and the input/output device 53 are connected to each other in a mutually communicable manner via the bus 50.

The computing device 51 virtually includes an information acquisition section 511, a determination section 512, and an output section 513. Each of the information acquisition section 511, the determination section 512, and the output section 513 is a functional block that exerts a specified function when the computing device 51 executes a work machine management program 521.

The storage 52 stores the work machine management program 521, map information 522, and work plan information 523. The map information 522 at least indicates the location and the area of the field 9. The work plan information 523 at least indicates a content of the work plan, which is created in advance to determine which work machine 2 performs the work in which field 9. The work machine management program 521, the map information 522, and the work plan information 523 may be read from a recording medium 520 and stored in the storage 52, or may be acquired from the outside via the input/output device 53 and stored in the storage 52.

The input/output device 53 includes a communication unit 531, a display unit 532, and an input unit 533. The communication unit 531 can be connected to the network 4 via the wired communication and/or the wireless communication, and can communicate with the onboard terminal 20 and/or the terminal 3 via the network 4. The display unit 532 displays and outputs a determination result by the determination section 512 of the computing device 51 in the visually recognizable manner. The input unit 533 includes a keyboard and a mouse, for example, and may be used by the user to operate the server 5. The display unit 532 and the input unit 533 may be installed, as an integrated touch panel, in the server 5.

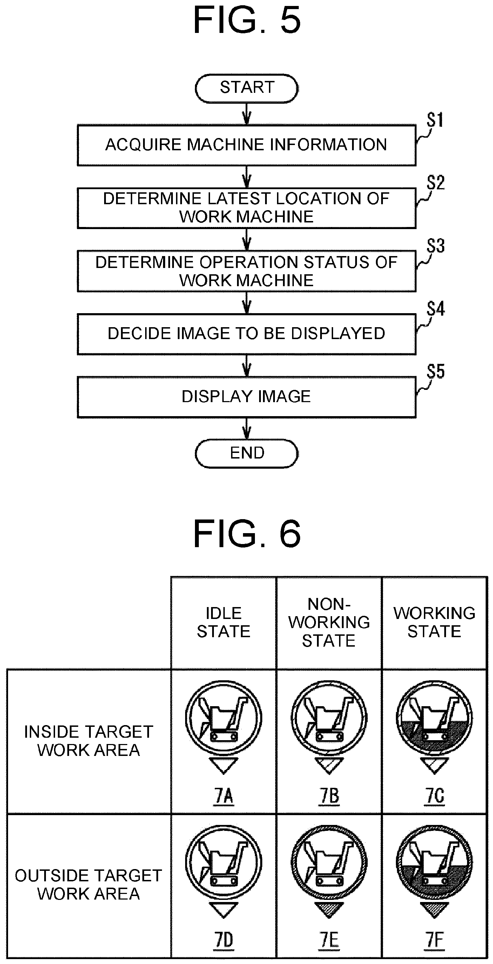

A description will be made on a configuration of the work machine management method according to the embodiment with reference to a flowchart in Fig. 5. Here, a configuration example of the work machine management method according to the embodiment is also an example of operation of the work machine management system 1 according to the embodiment. In addition, Fig. 5 also illustrates a configuration example of the work machine management program 321 according to the embodiment.

For example, the flowchart in Fig. 5 is initiated when the user operates the server 5 to run the work machine management program 521. Once the flowchart in Fig. 5 initiated, processing in step S1 is executed.

In step S1, the computing device 51 of the server 5 executes the work machine management program 521 to exert a function of the information acquisition section 511. The information acquisition section 511 acquires machine information from the onboard terminal 20 of the work machine 2 via the network 4, or the like. The information acquisition section 511 may acquire the machine information from each of the plural onboard terminals 20 that are respectively mounted on the plural work machines 2.

Here, the onboard terminal 20 may keep transmitting the machine information regardless of whether the server 5 is ready to receive the machine information.

The machine information at least includes the location information indicating the latest location of the work machine 2. The latest location of the work machine 2 is a location indicated by the positioning information that is acquired from the latest measurement of the location of the onboard terminal 20. The computing device 210 of the onboard terminal 20 executes the transmission program 222 to exert a function of the transmission section 211. The transmission section 211 controls the positioning unit 233 to acquire the positioning information, associates the positioning information with positioning time information indicating time at which the positioning information is acquired, and stores the associated positioning information in the storage 220. The transmission section 211 repeatedly acquires the positioning information at plural times. As an example, the transmission section 211 may periodically acquire the positioning information. As another example, the transmission section 211 may acquire the positioning information every minute.

The onboard terminal 20 is activated cooperatively when the user activates the work machine 2. When the onboard terminal 20 is activated, the computing device 210 automatically executes the transmission program 222. When the transmission program 222 is executed, the transmission section 211 automatically starts acquiring the positioning information. The transmission section 211 generates the machine information at least including the positioning information, controls the communication unit 231, and then transmits the machine information to the server 5.

The information acquisition section 511 of the server 5 stores the acquired machine information in the storage 52. In addition to the location information, the machine information may further include operation status information indicating an operation status of the work machine 2. A detailed description on the operation status information will be made below.

After step S1, processing in step S2 is executed. In step S2, the computing device 51 of the server 5 executes the work machine management program 521 to exert a function of the determination section 512. The determination section 512 determines whether the latest location of the work machine 2 is in the field 9. In order to make this determination, the determination section 512 refers to the machine information to read the latest location of the work machine 2 while referring to the map information 522 to read field information indicating the location and the area of the field 9. In the case where the latest location of the work machine 2 is in the area of the field 9, the determination section 512 determines that the work machine 2 is in the field 9. In the other case, the determination section 512 determines that the work machine 2 is outside the field 9. The determination section 512 stores first determination information indicating the result of this determination in the storage 52.

In the case where the determination section 512 determines that the latest location of the work machine 2 is in the field 9, the determination section 512 further determines whether the work machine 2 is planned to perform the work in this field 9. The content of the work plan, which is created in advance to determine which work machine 2 performs the work in which field 9, is included in the work plan information 523. Here, the work plan information 523 includes target work area information indicating a target work area in the field 9 where the work by the work machine 2 is planned. By referring to the work plan information 523, the determination section 512 determines whether the field 9 where the work machine 2 is located is the target work area where the work by the work machine 2 is planned. In other words, the work plan information 523 includes the target work area information indicating the target work area. The determination section 512 further stores second determination information indicating the result of this determination in the storage 52.

After step S2, processing in step S3 is executed. In step S3, the computing device 51 of the server 5 executes the work machine management program 521 to further exert another function of the determination section 512. The determination section 512 further determines the operation status of the work machine 2. In order to make this determination, the determination section 512 refers to the machine information to read the operation status information indicating the operation status of the work machine 2.

A description will be made on the operation status information. In the embodiment, the operation status of the work machine 2 is distinguished into an idle state, a non-working state, and a working state. A state where the work machine 2 is keyed off is called the idle state. A state where the work machine 2 is keyed on and is not performing the work is called the non-working state. A state where the work machine 2 is keyed on and a portion that is provided to the work machine 2 and performs the agricultural work is performing the work is called the working state.

A description will be made on a method in which the transmission section 211 of the onboard terminal 20 transmits the operation status of the work machine 2. The transmission section 211 receives, via the detector 236, the work machine state signal indicating the state of the work machine 2. Examples of the work machine state signal are a signal indicating that the work machine 2 is in a key-on state, a signal indicating a moving speed of the work machine 2, and a signal indicating whether power is transmitted to the portion that is provided to the work machine 2 and performs the agricultural work. However, in the case where the work machine 2 is in the idle state and a power supply of the onboard terminal 20 is also in an off state in an interlocking manner, the onboard terminal 20 may also stop a function of identifying that the work machine 2 is in the idle state. In this case, the transmission section 211 may not receive a signal indicating that the work machine 2 is in a key-off state as a part of the work machine state signal.

The transmission section 211 generates the machine information at least including the positioning information and the operation status information, and transmits this machine information to the information acquisition section 511 of the server 5. The transmission section 211 may store the generated machine information in the storage 220 before transmitting the machine information to the information acquisition section 511.

The information acquisition section 511 of the server 5 receives the machine information at least including the location information and the operation status information, and stores the machine information in the storage 52. The determination section 512 of the server 5 reads the operation status information from the machine information stored in the storage 52, and determines to which of the idle state, the non-working state, and the working state the operation status of the work machine 2 corresponds at the time indicated by time information associated with this operation status information. The determination section 512 further stores third determination information indicating the result of this determination in the storage 52.

The determination section 512 of the server 5 controls the communication unit 531 and transmits the first determination information, the second determination information, and the third determination information to the terminal 3.

After step S3, processing in step S4 is executed. In step S4, the computing device 31 of the terminal 3 executes the work machine management program 321 to exert a function of the output section 313. First, the output section 313 receives the first determination information, the second determination information, and the third determination information from the server 5 via the communication unit 331, and stores the first determination information, the second determination information, and the third determination information in the storage 32. Next, the output section 313 decides an image (and/or a pictorial figure) for indicating the operation status of the work machine 2, and the like. More specifically, based on the determination result by the determination section 512 of the server 5 in step S2, the output section 313 first generates pictorial figure information indicating the pictorial figure for displaying in an identifiable manner whether the latest location of the work machine 2 is in the field 9. The output section 313 further reads the map information 322 from the storage 32 to generate map image information indicating a map image for displaying a map of a region around the work machine 2 and/or the field 9. Next, the output section 313 generates composite image information indicating a composite image in which the pictorial figure is superimposed on the map image. Here, the output section 313 generates the composite image information such that, in the composite image, the pictorial figure is arranged on the map and at a location corresponding to the latest location of the work machine 2. The output section 313 further generates the composite image information such that the location and the area of the field 9 is displayed on the map in the composite image.

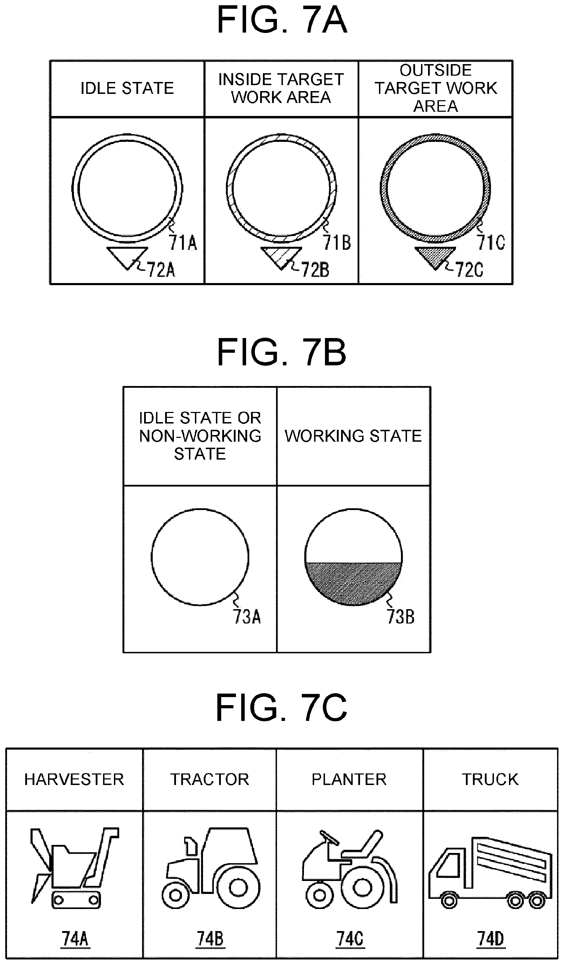

A description will be made on generation of the pictorial figure information. As illustrated in Fig. 6, pictorial figures 7A to 7F according to the embodiment have different forms according to the state of the work machine 2 so as to allow easy identification of the state of the work machine 2. For example, the state of the work machine 2 is classified into a total of six types, combining two types indicating whether the work machine 2 is inside the target work area or outside the target work area and three types indicating whether the work machine 2 is in the idle state, the non-working state, or the working state. The pictorial figures 7A to 7F illustrated in Fig. 6 respectively correspond to these six types of the state. When not being distinguished, the pictorial figures 7A to 7F will collectively and simply be referred to as pictorial figures 7.

A description will be made on components of each of the pictorial figures 7A to 7F according to the embodiment with reference to Fig. 7A, Fig. 7B, and Fig. 7C. As an example, Fig. 7A illustrates three types of frames 71A, 71B, 71C and three types of arrows 72A, 72B, 72C. As an example, Fig. 7B illustrates two types of backgrounds 73A, 73B. As an example, Fig. 7C illustrates four types of pictograms 74A, 74B, 74C, 74D. When not being distinguished, the frames 71A, 71B, 71C will collectively and simply be referred to as frames 71. When not being distinguished, the arrows 72A, 72B, 72C will collectively and simply be referred to as arrows 72. When not being distinguished, the backgrounds 73A, 73B will collectively and simply be referred to as backgrounds 73. When not being distinguished, the pictograms 74A, 74B, 74C, 74D will collectively and simply be referred to as pictograms 74.

The pictorial figure 7 is formed by superimposing one each of the frame 71, the arrow 72, the background 73, and the pictogram 74. More specifically, one of the frames 71 and one of the arrows 72 are superimposed on one of the background 73, and then one of the pictogram 74 is further superimposed thereon to form the pictorial figure 7. In other words, the frame 71, the arrow 72, the background 73, and the pictogram 74 are included in the components of the pictorial figure 7.

In the embodiment, the frame 71A and the arrow 72A are used to indicate that the work machine 2 is in the idle state. Meanwhile, the frames 71B, 71C and the arrows 72B, 72C are used to indicate that the work machine 2 is not in the idle state. In other words, the frames 71B, 71C and the arrows 72B, 72C are used to indicate that the work machine 2 is in the non-working state or the working state.

In the embodiment, the frame 71B and the arrow 72B are used to indicate that the work machine 2 is not in the idle state and is located inside the target work area. Meanwhile, the frame 71C and the arrow 72C are used to indicate that the work machine 2 is not in the idle state and is located outside the target work area.

Here, of the fields 9, the target work area is the field 9 where the work machine 2 is planned in advance to perform the work. Accordingly, the frame 71C and the arrow 72C are preferably displayed in an alarming color, such as red, to warn the user that the work machine 2 is in the field 9 where the work by the work machine 2 is not planned that the work machine 2 is not in the idle state. On the contrary, the frame 71B and the arrow 72B are preferably displayed in a color suggesting safety, such as green, to indicate to the user that the work machine 2 is performing the work in the field 9 as planned or that the work by the work machine 2 is interrupted. The frame 71A and the arrow 72A are preferably displayed in a less conspicuous color, such as gray, that differs from the colors of the frame 71B, the arrow 72B, the frame 71C, and the arrow 72C to indicate that the work machine 2 is in the idle state.

In other words, a pair of the frame 71A and the arrow 72A, a pair of the frame 71B and the arrow 72B, and a pair of the frame 71C and the arrow 72C are displayed in three easily identifiable forms. For a purpose of describing the above, in Fig. 7A, the frame 71A and the arrow 72A are illustrated in outline forms, the frame 71B and the arrow 72B are illustrated with relatively light hatches, and the frame 71C and the arrow 72C are illustrated with intermediate density hatches.

In the embodiment, the background 73A is used to indicate that the work machine 2 is in the idle state or the non-working state. On the contrary, the background 73B is used to indicate that the work machine 2 is in the working state. Among combinations of the background 73 and the frame 71, the combination to which the user is desired to pay the most attention is a combination indicating that the work machine 2 is working in the working state in the field 9 outside the target work area. In other words, as soon as discovering such a combination, the user may contact an operator who operates such a work machine 2 and instruct the operator to stop the work. Thus, it is preferred that the background 73B is displayed more prominently when being combined with the frame 71C than when being combined with the background 73A. For a purpose of describing the above, in Fig. 7B, the background 73A in illustrated in an outline form, and the background 73B is illustrated such that a top half thereof is in an outline form and a bottom half thereof is illustrated with relatively dense hatches.

In the embodiment, the pictogram 74 indicates a type of the work machine 2. As exemplified in Fig. 7C, the pictogram 74A indicates the harvester, the pictogram 74B indicates the tractor to which the work machine can be attached, the pictogram 74C indicates the planter, and the pictogram 74D indicates a truck. Each of the pictograms 74A to 74D schematically illustrates the respective type of the work machine 2 such that the corresponding type of the work machine 2 can easily be identified. Type information indicating the type of the work machine 2 may be included in the machine information that is transmitted by the onboard terminal 20 mounted on the work machine 2. In addition, the type information indicating the type of the work machine 2 may be stored in the storage 52 of the server 5 in advance in association with a terminal identification ID of the onboard terminal 20 mounted on this work machine 2. Then, the type of the work machine 2 may be identified on the basis of the terminal identification ID transmitted from the onboard terminal 20.

The description on the pictorial figures 7A to 7F, which are illustrated in Fig. 6), will be made again on the basis of the above description. The pictorial figure 7A is formed by superimposing the frame 71A and the arrow 72A, which indicate the idle state, the background 73A, which indicates the idle state, and the pictogram 74A, which indicates the harvester. The pictorial figure 7B is formed by superimposing the frame 71B and the arrow 72B, which indicate that the work machine 2 is in the target work area, the background 73A, which indicates the non-working state, and the pictogram 74A, which indicates the harvester. The pictorial figure 7C is formed by superimposing the frame 71B and the arrow 72B, which indicate that the work machine 2 is in the target work area, the background 73B, which indicates the working state, and the pictogram 74A, which indicates the harvester. The pictorial figure 7D is formed by superimposing the frame 71A and the arrow 72A, which indicate the idle state, the background 73A, which indicates the idle state, and the pictogram 74A, which indicates the harvester. The pictorial figure 7E is formed by superimposing the frame 71C and the arrow 72C, which indicate that the work machine 2 is outside the target work area, the background 73A, which indicates the non-working state, and the pictogram 74A, which indicates the harvester. The pictorial figure 7F is formed by superimposing the frame 71C and the arrow 72C, which indicate that the work machine 2 is outside the target work area, the background 73B, which indicates the working state, and the pictogram 74A, which indicates the harvester.

By forming the pictorial figure 7 just as described, the user can easily identify whether the work machine 2 corresponding to the pictorial figure 7 is in the idle state, the non-working state, or the working state, can easily identify whether this work machine 2 is inside the target work area, and can also easily identify the type of this work machine 2.

The output section 313 may store the pictorial figure information indicating the pictorial figure 7, which is formed in a manner to correspond to the work machine 2, in the storage 32.

When generating the composite image information, the output section 313 uses a lower end portion of the arrows 72, which constitutes the pictorial figure 7, as a reference point, and arranges the pictorial figure 7 on the map image such that this reference point indicates the latest location of the work machine 2 in the map image. The output section 313 may store the generated composite image information in the storage 32.

After step S4 illustrated in Fig. 5, processing in step S5 is executed. In step S5, the computing device 31 of the terminal 3 executes the work machine management program 321 to further exert another function of the output section 313. The output section 313 displays the image. More specifically, the output section 313 controls the display unit 332 to display the composite image generated in step S4. In other words, the output section 313 arranges and displays the location and the area of the field 9 on a map of a region including the field 9, and further arranges and displays the pictorial figure 7 at the location corresponding to the latest location of the work machine 2.

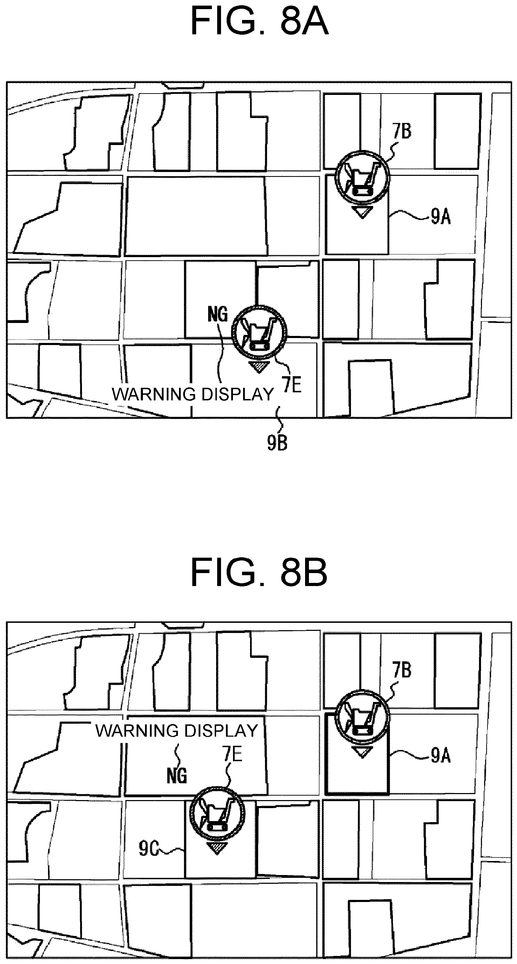

As an example of the composite image that is displayed on the display unit 332, in a case of Fig. 8A, the pictorial figure 7B indicates that a first work machine 2 in the non-working state is located inside a target work area 9A where the work by the first work machine 2 is planned. Here, road contours are indicated by thin lines while contours of the fields and the like are indicated by bold lines. In addition, the pictorial figure 7E indicates that a second work machine 2 in the non-working state is located in an area 9B that is not the field. A character string "NG" may additionally be displayed near the pictorial figure 7E to display such a warning that the operation status of the second work machine 2 corresponding to the pictorial figure 7E is possibly abnormal. By looking at the pictorial figure 7E, the user can easily identify the possible abnormality, and can immediately contact the worker, who is scheduled to work on the second work machine 2 corresponding to the pictorial figure 7E, to check the second work machine 2.

As another example of the composite image displayed on the display unit 332, in a case of Fig. 8B, the pictorial figure 7B indicates that the first work machine 2 in the non-working state is located inside the target work area 9A where the work by the first work machine 2 is planned. Here, the road contours are indicated by the thin lines, the target work area 9A is indicated by the bold lines, and another field 9C and the like are indicated by lines in intermediate thickness. In addition, the pictorial figure 7E indicates that the second work machine 2 in the non-working state is located in a field 9C that is not the target work area. The character string "NG" may additionally be displayed near the pictorial figure 7E to display such a warning that the operation status of the second work machine 2 corresponding to the pictorial figure 7E is possibly abnormal. By looking at the pictorial figure 7E, the user can easily identify the possible abnormality, and can immediately contact the worker, who is scheduled to work on the second work machine 2 corresponding to the pictorial figure 7E, to check the second work machine 2.

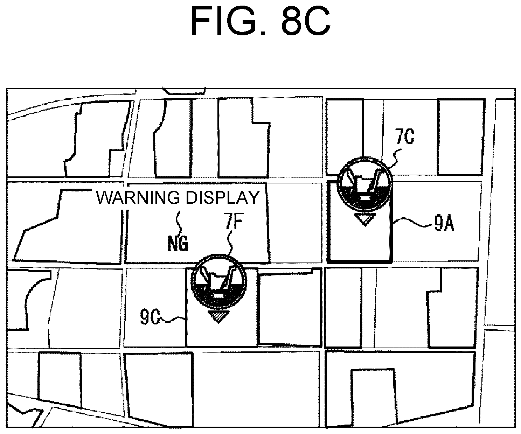

As further another example of the composite image displayed on the display unit 332, in a case of Fig. 8C, the pictorial figure 7C indicates that the first work machine 2 in the working state is located inside the target work area 9A where the work by the first work machine 2 is planned and that the first work machine 2 is performing the work. Here, the road contours are indicated by the thin lines, the target work area 9A is indicated by the bold lines, and the other field 9C and the like are indicated by lines in intermediate thickness. In addition, the pictorial figure 7F indicates that the second work machine 2 is inside a target work area 9C where the work by the second work machine 2 is not planned and that the second work machine 2 is performing the work. The character string "NG" may additionally be displayed near the pictorial figure 7F to display such a warning that the operation status of the second work machine 2 corresponding to the pictorial figure 7F is possibly abnormal. By looking at the pictorial figure 7F, the user can easily identify the possible abnormality, and can immediately contact the worker, who is scheduled to work on the second work machine 2 corresponding to the pictorial figure 7F, to check the second work machine 2.

As illustrated in the examples of Fig. 8A, Fig. 8B, and Fig. 8C, according to the embodiment, in the case where the work machine 2 not in the idle state is located in the area that is not the field 9, is in the field 9 that is not the target work area, or is in the target work area where the work by the work machine 2 is not planned, the user can easily identify the possible abnormality of the state of the work machine 2, and thus can immediately contact the worker, who is scheduled to work on the work machine 2, to check the work machine 2.

In the composite image that is displayed on the display unit 332, in addition to the map indicating the location and the area of the field 9 and the pictorial figure 7 indicating the latest location and the operation status of the work machine 2, an image or a pictorial figure indicating further information may additionally be superimposed. Examples of the information indicating the image or the pictorial figure to be added are a movement locus of the work machine, outlines distinguishing the target work area from the other field 9, the content of the work plan, and an interface image used to control display or non-display of such additional information.

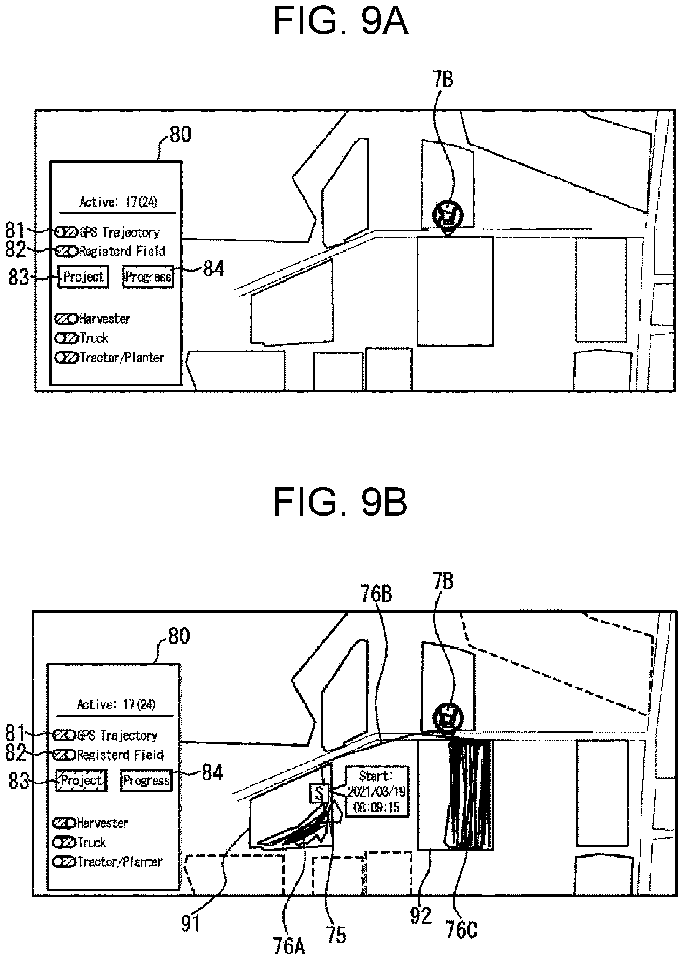

As an example of the composite image to which the information is added, in a case of Fig. 9A, an interface image 80 is added to the composite image in addition to the map and the pictorial figure 7. The interface image 80 is provided with plural switches. These switches may include a first switch 81 that can be operated by the user to switch between display and non-display of a movement path of the work machine 2. In addition, these switches may include a second switch 82 that can be operated by the user to switch between display and non-display of the outlines for identifying the field 9. Furthermore, these switches may include a third switch 83 that can be operated by the user to switch between display and non-display of the outlines distinguishing the target work area, where the work by the work machine 2 is planned, from the other field 9. Moreover, a fourth switch 84 may be provided to enable color-coded display of progress in each of the target work areas. These switches may include a fifth switch (not illustrated) that can be operated by the user to collectively switch between display and non-display of the pictorial figure 7, the above movement path, and the above outlines.

As another example of the composite image to which the information is added, in a case of Fig. 9B, in addition to the map, the pictorial figure 7B, and the interface image 80 illustrated in 9A, movement loci 76A, 76B, 76C of the work machine 2 and the outlines distinguishing the target work areas 91, 92 from the other fields.

Here, the movement loci 76A, 76B, 76C of the work machine 2 are illustrated in Fig. 9B as a result of an operation of the first switch 81 be in an on state. The locus 76A represents such a locus that the work machine 2 starts moving at a movement start point 75, moves within a target work area 91, and moves out of the target work area 91. The locus 76B represents such a locus that the work machine 2 moves out of the target work area 91, moves on a road, and enters a target work area 92. The locus 76C represents such a locus that the work machine 2 enters a target work area 92 and moves within the target work area 92. The pictorial figure 7B is arranged at the location corresponding to the latest location of the work machine 2 on the map. In addition to a mark that indicates a location of the movement start point 75 on the map, information on movement start time, at which the work machine 2 started moving from this movement start point 75, may further be displayed in the composite image.

In addition, in Fig. 9B, the outlines of the target work areas including the target work areas 91, 92 are distinguished from the outlines of the other fields. In the example illustrated in Fig. 9B, the former is displayed by solid lines, and the latter is displayed by broken lines. However, the embodiment is not limited to this example, and both of those may be displayed in different colors, for example.

Just as described, by additionally displaying the further information in the composite image or switching the display thereof to a non-display state, the user can further easily identify whether the work machine 2 is performing the work according to the work plan.

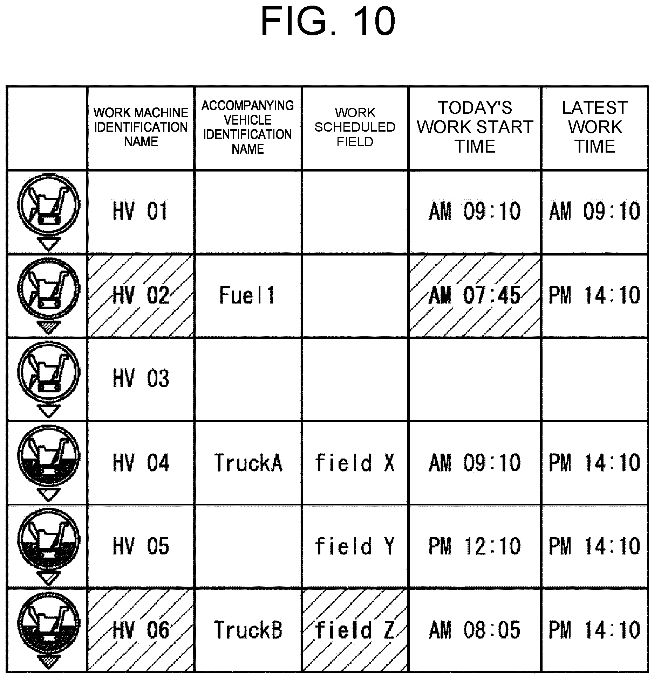

The display unit 332 may display a table that lists the operation statuses of the plural work machines 2. As illustrated in Fig. 10, such a table may include, for each of the work machines 2, the pictorial figure 7 of the work machine 2, an identification name of the work machine 2, an identification name of a vehicle accompanying the work machine 2, the field where the work is scheduled or the field where the work is currently performed, work start time at which the work of the day is started, the latest time at which the work is detected, and the like.

In this table, the user may be cautioned about the possible abnormality not only by the display using the alarming color for the pictorial figure 7 but also by highlighting a cell corresponding to a parameter, to which the abnormality possibly occurs.

As an example, in the case where the time at which the certain work machine 2 started performing the work does not fall within a work plan period in which the actual work start time is planned in advance, the cell indicating the identification name of such a work machine 2 and the cell indicating the start work time corresponding to such a work machine 2 are highlighted. Work plan period information indicating the work plan period is included in the work plan information 323. In the example illustrated in Fig. 10, a cell indicating "HV 02" and a cell indicating "AM 07:45" are highlighted by bold text and hatched backgrounds.

As another example, in the case where the certain work machine 2 is performing the work in the different field from the field scheduled in the work plan, a cell indicating the identification name of such a work machine 2 and a cell indicating the work scheduled field or the currently worked field corresponding to such a work machine 2 are highlighted. In the example illustrated in Fig. 10, a cell indicating "HV 06" and a cell indicating "field Z" are highlighted by the bold text and the hatched backgrounds.

In the example illustrated in Fig. 10, the cells are highlighted by the bold text and the hatched backgrounds. However, the embodiment is not limited to this example. To highlight the cell, colors of the text and the background may be changed, for example.

As described above, according to the embodiment, due to the display of the table or the like in addition to the display using the pictorial figure 7 that is arranged on the map, an amount of the information per unit area of the display unit 332 is increased, and thus the operation status of the work machine 2 can further easily be identified.

### (Modified Examples)

In the above-described embodiment, the description has been made on the configuration example in which the transmission section 211 of the onboard terminal 20 transmits the machine information even without a request from the information acquisition section 511 of the server 5. However, the embodiment is not limited to such a configuration. As another example, the transmission section 211 may start transmitting the machine information when being requested by the information acquisition section 511. At this time, in step S1 in the flowchart illustrated in Fig. 5, the information acquisition section 511 of the server 5 first transmits a request signal for requesting the transmission of the machine information to the transmission section 211 of the onboard terminal 20. Then, in response to this request signal, the transmission section 211 transmits the machine information to the information acquisition section 511 of the server 5. As further another example, the transmission section 211 of the onboard terminal 20 may accumulate the machine information in the storage 220 before receiving the request signal from the information acquisition section 511 of the server 5. Then, after receiving the request signal, the transmission section 211 of the onboard terminal 20 may transmit the accumulated machine information to the information acquisition section 511 of the server 5. At this time, the information acquisition section 511 of the server 5 may transmit, to the onboard terminal 20, a reception confirmation signal indicating to which machine information the information acquisition section 511 has received. According to the reception confirmation signal, the transmission section 211 of the onboard terminal 20 may only transmit the machine information following the received machine information to the information acquisition section 511 of the server 5.

In the above-described embodiment, the description has been made on the configuration example in which the onboard terminal 20 mounted to the work machine 2 detects that the work machine 2, which performs the agricultural work in the field 9, is in the working state. However, the embodiment is not limited to such a configuration. As another example, in the case where the truck accompanies the harvester to load harvested crops at the time when the harvester harvests crops in the field 9, it is possible to estimate that the harvester is in the working state by detecting the a state of the truck that accompanies the harvester. In such a case, the onboard terminal 20, which is mounted on the work machine 2, may cooperate with another onboard terminal mounted on the truck to detect that the work machine 2 is in the working state, or the other onboard terminal mounted on the truck may individually detect that the work machine 2 is in the working state. In other words, the onboard terminal detecting that the work machine 2 is in the working state or the other state may not be mounted on the work machine 2.

In the above-described embodiment, the description has been made on the configuration that, in the flowchart illustrated in Fig. 5, the information acquisition section 511 and the determination section 512 of the server 5 execute the processing in steps S1 to S3 and the output section 313 of the terminal 3 executes the processing in steps S4, S5. However, the embodiment is not limited to such an example. In step S1, all or some of the functions of the information acquisition section 511 in the server 5 may be exerted by the information acquisition section 311 of the terminal 3. In steps S2, S3, all or some of the functions of the determination section 512 in the server 5 may be exerted by the determination section 312 of the terminal 3. In steps S4, S5, all or some of the functions of the output section 313 in the terminal 3 may be exerted by the output section 513 of the server 5.

In the above-described embodiment, as illustrated in Fig. 10, the description has been made on the configuration that the work start time is displayed in the table. This work start time may be the movement start time that has been described with reference to Fig. 9B. Conversely, the information on the movement start time that is displayed on the map in the composite image exemplified in Fig. 9B may be information on the work start time. In addition, the information on the movement start time that is displayed on the map in this composite image may be switched between a display state and a non-display state according to the user's operation.

The specific description has been made so far on the basis of the embodiment of the invention made by the inventor. However, it is needless to say that the present invention is not limited to the embodiment and various modifications can be made thereto within the scope that does not depart from the gist of the invention. In addition, the features described in the embodiment can freely be combined within the scope that is not technically contradictory.

### REFERENCE SIGNS LIST

1: Work machine management system
2: Work machine
20: Onboard terminal
200: Bus
210: Computing device
211: Transmission section
220: Storage
221: Recording medium
222: Transmission program
230: Input/output device
231: Communication unit
232: Antenna
233: Positioning unit
234: Output unit
235: Input unit
236: Detector
3: Terminal
30: Bus
31: Computing device
311: Information acquisition section
312: Determination section
313: Output section
32: Storage
320: Recording medium
321: Work machine management program
322: Map information
323: Work plan information
33: Input/output device
331: Communication unit
332: Display unit
333: Input unit
4: Network
5: Server
50: Bus
51: Computing device
511: Information acquisition section
512: Determination section
513: Output section
52: Storage
520: Recording medium
521: Work machine management program
522: Map information
523: Work plan information
53: Input/output device
531: Communication unit
532: Display unit
533: Input unit
7A, 7B, 7C, 7D, 7E, 7F: Pictorial figure
71A, 71B, 71C: Frame
72A, 72B, 72C: Arrow
73A, 73B: Background
74A, 74B, 74C, 74D: Pictogram
75: Movement start point
76A, 76B, 76C: Locus
80: Interface image
81, 82, 83: Switch
9, 9A, 9C: Field (target work area)
9B: Area
91, 92: Target work area

## Claims

1. A work machine management method comprising:
determining whether a latest location of a work machine is in a field on the basis of machine information at least including location information indicating the latest location of the work machine and field information at least indicating a location and an area of the field; and
outputting pictorial figure information indicating a pictorial figure for displaying whether the latest location of the work machine is in the field in an identifiable manner.

2. The work machine management method according to claim 1, wherein
the output includes displaying the location and the area of the field and the pictorial figure arranged at a location corresponding to the latest location of the work machine on a map of a region including the field.

3. The work machine management method according to claim 2, wherein
the output further includes displaying, on the map, a mark indicating a location of a movement start point, at which the work machine started moving, and information on movement start time, at which the work machine started moving.

4. The work machine management method according to any one of claims 1 to 3, wherein
the machine information further includes operation status information indicating whether the work machine is currently operated, and
the output includes outputting the pictorial figure information indicating the pictorial figure for further displaying whether the work machine is currently operated in the identifiable manner.

5. The work machine management method according to claim 4 further including:
preparing work plan information indicating a work plan and at least including target work area information indicating a target work area in the field where work by the work machine is planned, wherein
the determination includes further determining whether the work machine is in the target work area further on the basis of the work plan information, and
the output further includes outputting the pictorial figure for further displaying whether the work machine is in the target work area in the identifiable manner.

6. The work machine management method according to claim 5, wherein
the work plan information further includes work plan period information indicating a work plan period in which the work by the work machine in the target work area is planned,
the determination includes determining whether the work machine is performing the work in the target work area during the work plan period on the basis of the work plan information, and
the output includes displaying whether the work machine is performing the work in the work plan period in the identifiable manner.

7. The work machine management method according to claim 5 or 6, wherein
the output further includes displaying information on time at which the work machine started performing the work.

8. The work machine management method according to any one of claims 5 to 7, wherein
the output further includes outputting information on a warning in the case where it is determined that the currently-operated work machine is performing work not included in the work plan.

9. The work machine management method according to any one of claims 1 to 8, wherein
the machine information further includes type information indicating a type of the work machine, and
the output further includes outputting the pictorial figure for further displaying the type of the work machine in the identifiable manner.

10. A work machine management system comprising:
a determination section that determines whether a latest location of a work machine is in a field on the basis of machine information at least including location information indicating the latest location of the work machine and field information at least indicating a location and an area of the field; and
an output section that outputs pictorial figure information indicating a pictorial figure for displaying whether the latest location of the work machine is in the field in an identifiable manner.

11. A work machine management program for realizing specified processing when being executed, wherein
the processing includes:
determining whether a latest location of a work machine is in a field on the basis of machine information at least including location information indicating the latest location of the work machine and field information at least indicating a location and an area of the field; and
outputting pictorial figure information indicating a pictorial figure for displaying whether the latest location of the work machine is in the field in an identifiable manner.
